# EUROPÄISCHE PATENTSCHRIFT

(11) **EP 0 605 692 B1**
(45) Veröffentlichungstag und Bekanntmachung des Hinweises auf die Patenterteilung: **03.09.1997**
(21) Anmeldenummer: 93915513.1
(22) Anmeldetag: 21.07.1993
(51) Int. Cl.: C05F 17/02, B01F 7/30

(54) **KOMPOSTBEHÄLTER MIT RÜHRWERK**
COMPOST CONTAINER WITH STIRRING DEVICE
RECIPIENT A COMPOST AVEC MECANISME AGITATEUR

(30) Priorität: 22.07.1992 AT 1502/92; 25.03.1993 AT 603/93
(43) Veröffentlichungstag der Anmeldung: 13.07.1994
(73) Patentinhaber: Wüster, Heinrich, A-6460 Imst/Tirol (AT)
(72) Erfinder: Wüster, Heinrich, A-6460 Imst/Tirol (AT)
(74) Vertreter: Berger, Erhard, Dr.
(86) Internationale Anmeldenummer: AT9300121
(87) Internationale Veröffentlichungsnummer: WO9402433

(56) Entgegenhaltungen:
- DE-A- 4 112 886
- US-A- 2 345 163

## Beschreibung

### GEBIET DER ERFINDUNG:

Die Erfindung bezieht sich auf einen Kompostbehälter mit einem von außen über eine Antriebswelle antreibbaren Rührwerk mit zumindest einem im Inneren des Kompostbehälters angeordneten, von der Antriebswelle in Drehung um seine eigene Achse versetzbaren Rührelement zum Umwälzen des Behälterinhaltes.

### STAND DER TECHNIK:

Bei einem bekannten Kompostbehälter dieser Art (GB 2 138 795 A) ist das Rührelement entlang der Behältermittelachse in Verlängerung der außerhalb des Kompostbehälters mit einer Handkurbel versehenen, die Behälterdecke nach innen durchsetzenden Antriebswelle in der unteren Behälterhälfte angeordnet und reicht mit seinem schraubenförmigen Rührblatt bis nahe zur Behälterseitenwand. Dieses Rührelement ist auf das Durchmischen des gesamten Inhaltes der unteren Behälterhälfte mit einer einzigen Umdrehung des Rührelementes bzw. der Handkurbel ausgelegt, weshalb die zum Drehen der Handkurbel erforderlichen Kräfte nur bei geringen Abfallmengen bzw. lockeren pflanzlichen Abfällen aufgebracht werden können. Für Kompostbehälter mit größerem Fassungsvermögen und entsprechend größerem Rührelement ist diese Ausführungsform nicht geeignet, ebenso wenig für kompaktes, feuchtes, klumpendes Kompostiergut, wie z.B. Küchenabfälle, sodaß dieser Kompostbehälter nur sehr begrenzt für eine ausreichende Belüftung des Kompostiergutes sorgen kann.

Ein konkreter Kompostiervorgang wird nur bei genügender Luft- und damit Sauerstoffzufuhr zu den Abfällen erreicht, was bei lockeren Abfällen wie Laub oder gehäckselten Zweigresten unproblematisch ist, aber bei Grasschnitt oder gar feuchten, klumpenden Küchenabfällen praktisch nicht möglich ist und neben stark riechender Fäulnisbildung zu mitunter auch giftigen Zersetzungsprodukten führen kann. In Hinblick auf die erforderliche Entlastung der Mülldeponien ist aber die verstärkte Kompostierung auch feuchter Küchenabfälle erforderlich.

Um die für eine möglichst geruchlose und rasche Kompostierung erforderliche Luft- bzw. Sauerstoffzufuhr zu den Abfällen im Kompostbehälter zu verbessern, ist es ferner bekannt, Belüftungslöcher an den seitlichen Wänden des Kompostbehälters anzubringen oder diese mit Lüftungsspalte begrenzenden Lamellen zu versehen oder in der Mitte des Kompostbehälters ein gelochtes Belüftungsrohr anzuordnen. Dadurch wird aber die Luftzufuhr nur in den unmittelbar an die Seitenwände bzw. an das mittige Belüftungsrohr anschließenden Randbereichen des Kompostiergutes verbessert, während in den davon weiter entfernten inneren Bereichen Sauerstoffmangel und damit Fäulnisatmosphäre herrscht.

Mit zunehmender Größe des Kompostbehälters werden die von den belüfteten Randbereichen weiter entfernten inneren Bereiche des Kompostiergutes immer größer und damit auch die Luftzufuhrprobleme.

Eine zu geringe Luftzufuhr läßt sich zumeist dadurch weitgehend verhindern, daß man den Inhalt des Kompostbehälters in kurzen Abständen händisch mischt, um so immer andere Teile des Kompostiergutes der Sauerstoffzufuhr auszusetzen. Das ist jedoch wegen der möglichen Geruchs- und Schmutzbelästigung eine unangenehme Tätigkeit.

Aus der US-PS 2 345 163 ist eine für die Kompostierung nicht geeignete Vorrichtung zum intensiven Durchmischen von aus flüssigen, pulverförmigen oder pastösen Materialien gebildeten Massen bekannt, welche in einem nach oben offenen Behälter von einem rotierenden Rührwerkzeug bearbeitet werden. Das Rührwerkzeug wird von einem über dem Behälter an einem Traggestell befestigten Rührwerk mittels eines zweiarmigen, die während des Rührens auf das Rührwerkzeug rückwirkenden, sich ständig ändernden Reaktionskräfte passiv ausnützenden Bewegungsmechanismus in unregelmäßigen, sich ständig verändernden und fortgesetzt überschneidenden Bahnbewegungen regellos umherbewegt. Das unabhängig vom Bewegungsmechanismus angetriebene Rührwerkzeug ist am freien Ende eines äußeren Armes angebracht, der um das äußere Ende eines inneren Armes kontinuierlich umläuft, während letzterer dazu gegenläufige, unregelmäßige Schenkbewegungen um die stationäre Mittelachse des Rührwerkes ausführt. Die während des Rührens stets von der momentanen Relativstellung der Arme und den diese verursachenden Reaktionskräften abhängigen Armbewegungen überlagern sich zu regellosen, stets dem geringsten Bewegungswiderstand folgenden Bahnbewegungen des Rührwerkzeuges, die einander fortgesetzt überschneiden und keine in sich geschlossene vom Rührwerkzeug wiederholt durchlaufene Bewegungsbahn ergeben. Diese auf das rasche und intensive Durchmischen der Materialkomponenten und deren gleichmäßige Verteilung in der jeweiligen Masse ausgerichtete Mischvorrichtung ist für eine intermittierende mechanische Behandlung eines etappenweise ergänzten Abfallhaufens während des mehrere Monate dauernden biologischen Rotteprozesses der Kompostierung nicht geeignet. Der den auf das Rührwerkzeug jeweils rückwirkenden Reaktionskräften stets passiv nachgebende Bewegungsmechanismus würde das Rührwerkzeuggerade an jenen sehr kompakten Stellen eines Abfallhaufens vorbeibewegen, in denen der Rührwiderstand, wegen der dicht gepackten Abfälle, besonders hoch ist und die gerade deshalb besonders gut aufgelockert werden müssen, um auch dort den für die Kompostierung unabdingbaren Frischluftzutritt zu ermöglichen.

### ZUSAMMENFASSUNG DER ERFINDUNG:

Aufgabe der Erfindung ist es einen Kompostbehälter zu schaffen, der ein einfaches, wirksames mechanisches Durchmischen des Kompostiergutes ermöglicht.

Dies wird ausgehend von einem Kompostbehälter der eingangs genannten Art erfindungsgemäß dadurch erreicht, daß eine Kammer zur Aufnahme des zu kompostierenden Gutes vorgesehen ist, in der zumindest ein, exzentrisch zur Antriebswelle angeordnetes und entlang einer in sich geschlossenen Bahn in Umlauf versetzbares Rührelement vorgesehen ist, welches mit der Antriebswelle über einen, die Rotations- und Umlaufbewegungen des Rührelementes steuernden und diese Bewegungen veränderbar miteinander koppelnden Antriebsmechanismus verbunden ist.

Durch die erfindungsgemäße Ausbildung wird jeweils nur ein örtlich begrenzter Teil des in der Kammer befindlichen Kompostiergutes von einem oder mehreren rotierenden Rührelementen aufgelockert bzw. umgewälzt und erst durch das allmähliche Fortschreiten der Rührelemente entlang ihrer Umlaufbahn nach und nach das gesamte Kompostiergut in der Kammer erfaßt. Die Bewegung jedes exzentrisch zur Antriebswelle angeordneten Rührelementes wird von dem dessen Rotations- und Umlaufbewegungen veränderbar miteinander koppelnden Antriebsmechanismus in mechanisch veränderbarer Weise aus unterschiedlich großen Rotations- und Umlaufanteilen zusammengesetzt, wobei die an der Antriebswelle aufgebrachte Antriebsenergie in mechanisch veränderbarer Weise auf die für das Auflockern der Abfälle vorgesehene Rotationsbewegung des Rührelementes bzw. auf die für das Fortschreiten des Rührelementes entlang seiner Bahn vorgesehene Umlaufbewegung aufgeteilt wird. Der Antriebsmechanismus kann durch teilweises oder vollständiges mechanisches Abkoppeln seines die Umlaufbewegung erzeugenden Antriebsteileszunehmend mehr Antriebsenergie für seinen die Rotationsbewegung erzeugenden Antriebsteil zur Verfügung stellen, sodaß die für das Auflockern der Abfälle vorgesehene Rotationsenergie des Rührelementes durch teilweises Verringern oder völliges Stillsetzen seiner Umlaufbewegung erhöht wird. Der Antriebsmechanismus erlaubt es, die für das Auflockern der Abfälle vorgesehene Rotationsenergie an jenen Stellen der Kammer, in denen der Rührwiderstand durch z.B. frisch eingebrachte, dicht gepackte Abfälle besonders hoch ist, zu Lasten der Umlaufbewegung so lange zu erhöhen, bis die dadurch erzeugte Auflockerung der Abfälle den Rührwiderstand so weit herabgesetzt hat, daß wieder ein Teil der Antriebsenergie für die Umlaufbewegung verwendet werden kann. Durch das allmähliche Fortschreiten der Rührelemente entlang ihrer Umlaufbahn werden nicht nur bereits stärker kompostierte Anteile des Kompostiergutes mit weniger kompostierten oder frisch eingebrachten Anteilen vermischt, sondern es werden auch die schwereren praktisch fertig kompostierten Anteile mit bereits erdähnlicher Struktur in der Kammer nach unten gefördert, sodaß sie am unteren Ende aus der Kammer entnommen werden können. Das Fortschreiten der Rührelemente entlang der in sich geschlossenen Bahn kann allmählich oder schrittweise erfolgen.

Erfindungsgemäß kann der Antriebsmechanismus im Inneren des Behälters, vorzugsweise an der Unterseite eines, die Kammer nach oben abschließenden, vorzugsweise abnehmbaren Deckels angebracht sein.

Gemäß einem weiteren Merkmal der Erfindung kann der Antriebsmechanismus einen, das Rührelement tragenden, um die Antriebswelle in Umlauf versetzbaren Tragarm und eine mit dem Tragarm in Umlauf versetzbare, das Rührelement mit der Antriebswelle verbindende Kraftübertragung umfassen.

Gemäß einem weiteren Merkmal der Erfindung kann der Tragarm zum veränderbaren Koppeln der Rotations- und Umlaufbewegungen des Rührelementes mit der Antriebswelle kraftschlüssig verbindbar sein. Die kraftschlüssige Verbindung kann ein Untersetzungsgetriebe oder eine Rutschkupplung enthalten.

Erfindungsgemäß kann zur kraftschlüssigen Verbindung von Antriebswelle und Tragarm eine Reibungsbremse für die Drehmomentübertragung von der Antriebswelle auf den Tragarm vorgesehen sein.

Gemäß einem weiteren Merkmal der Erfindung kann der Tragarm zum veränderbaren Koppeln der Rotations- und Umlaufbewegungen des Rührelementes mit der Rührelementwelle kraftschlüssig verbindbar sein. Die kraftschlüssige Verbindung kann ein Untersetzungsgetriebe oder eine Rutschkupplung enthalten.

Erfindungsgemäß kann zur kraftschlüssigen Verbindung von Rührelementwelle und Tragarm eine Reibungsbremse für die Drehmomentübertragung von der Rührelementwelle auf den Tragarm vorgesehen sein.

Um die Umlaufbewegung des Tragarmes auf unterschiedliches Kompostiergut einstellen zu können, kann erfindungsgemäß eine Vorrichtung zum Verstellen der Reibungsbremse vorgesehen sein.

Zum selbsttätigen Anpassen der Umlaufbewegung des Tragarmes auf unterschiedliche Verteilungen des Kompostiergutes im Kompostbehälter kann erfindungsgemäß ein am Tragarm angebrachter, mit dem Kompostiergut in Eingriff bringbarer mechanischer Fühler mit der Vorrichtung zum Verstellen der Reibungsbremse verbunden sein.

Ein weiteres Merkmal der Erfindung sieht vor, daß am Tragarm ein gegenüber diesem entgegen Federkraft bewegbarer Rührelementträger vorgesehen ist, in welchem die Rührelementwelle drehbar gelagert ist, und daß der Rührelementträger zum veränderbaren Koppeln der Rotations- und Umlaufbewegungen des Rührelementes über eine Reibungsbremse mit der Antriebswelle kraftschlüssig verbindbar ist. Die federnde Abstützung des Rührelementträgers gegenüber dem Tragarm erlaubt eine kurzzeitige Verlangsamung der Umlaufgeschwindigkeit des Tragarmes, wenn das Rührelement auf fester gepacktes Kompostiergut trifft.

Ein weiteres Merkmal der Erfindung sieht vor, daß der Rührelementträger mit einer Vorrichtung zum Verstellen der Reibungsbremse verbunden ist. Diese Ausbildung erlaubt es einen Anteil des auf den Tragarm für dessen Umlaufbewegung übertragenen Drehmomentes auf den Antrieb der Rührelementwelle zu verlagern.

Ein weiteres Merkmal der Erfindung sieht vor, daß der Rührelementträger über ein mittels Federkraft in die gestreckte Lage vorgespanntes Knickgelenk mit dem Tragarm verbunden ist. Diese Ausbildung ermöglicht eine Verlangsamung der Umlaufgeschwindigkeit bei schwererem Kompostiergut und eine anschliessende selbsttätige Erhöhung der Umlaufgeschwindigkeit bei lockerem Kompostiergut.

Ein weiteres Merkmal der Erfindung sieht vor, daß zum veränderbaren Koppeln der Rotations- und Umlaufbewegungen des Rührelementes eine, durch die Relativbewegung zwischen Tragarm und Rührelementträger verstellbare Bandbremse vorgesehen ist, wobei die dieser Relativbewegung entgegenwirkende Feder als Spannfeder für die Bandbremse ausgebildet ist. Dies erlaubt eine automatische Anpassung der Umlaufgeschwindigkeit auf den Bewegungswiderstand des Kompostiergutes und eine Erhöhung des Rotationsdrehmomentes des Rührelementes bei Herabsetzung des Umlaufdrehmomentes des Tragarmes durch die von der Bandbremse verursachte Drehmomentübertragung auf den Tragarm.

Gemäß einem weiteren Merkmal der Erfindung kann vorgesehen sein, daß der Antriebsmechanismus ein Klinkenschaltwerk zum in Umlaufversetzen des Tragarmes aufweist.

Gemäß einem weiteren Merkmal der Erfindung kann vorgesehen sein, daß das Klinkenschaltwerk ein am Behälter bzw Behälterdeckel fixierbares Klinkenrad und zumindest eine, mit diesem in Eingriff bringbare Antriebsklinke aufweist, die mittels eines mit dem Rührelement mitrotierenden Exzenters bewegbar ist.

Gemäß einem weiteren Merkmal der Erfindung kann vorgesehen sein, daß das Klinkenschaltwerk eine, an einem mit dem Rührelement mitrotierenden Exzenter schwenkbar gelagerte Schubklinke und eine an der Schubklinke schwenkbar gelagerte Zugklinke und eine an beiden Klinken angreifende, die Klinken gegen das Klinkenrad drückende Feder aufweist.

Gemäß einem weiteren Merkmal der Erfindung kann vorgesehen sein, daß das Klinkenrad an einer die Decke des Behälters bzw des Behälterdeckels durchsetzenden Hülse angebracht ist, welche in der Decke drehbar gelagert ist und mittels einer von der Oberseite der Decke zugänglichen Klemmvorrichtung an der Decke fixierbar ist.

Gemäß einem weiteren Merkmal der Erfindung kann die das Rührelement mit der Antriebswelle verbindende Kraftübertragung zwei ineinandergreifende, auf der Antriebswelle bzw. auf der Rührelementwelle jeweils drehfest angeordnete Antriebsräder aufweisen.

Gemäß einem weiteren Merkmal der Erfindung kann zwischen den beiden Antriebsrädern ein am Tragarm drehbar gelagertes Zwischenrad zwischengeschaltet sein.

Die das Rührelement mit der Antriebswelle verbindende Kraftübertragung kann ein mit der Antriebswelle gekoppelter Ketten-, Riemen- oder Kardanantrieb sein. Erfindungsgemäß wird ein gegebenenfalls gekapselter Kettentrieb bevorzugt.

Gemäß einem weiteren Merkmal der Erfindung kann die Kammer zur Aufnahme des zu kompostierenden Gutes nach unten durch einen Siebboden begrenzt sein. Diese Ausbildung ermöglicht es, die schwereren praktisch fertig kompostierten Anteile mit bereits erdähnlicher Struktur, die in der Kammer nach unten zum Siebboden befördert werden, durch den Siebboden hindurch aus der Kammer auszuscheiden. Diese Ausbildung des Kompostbehälters erlaubt somit eine kontinuierliche Kompostierung mit kontinuierlicher Abscheidung des fertigen Kompostes vom noch unvollständig kompostierten Kompostiergut. Mit der Auswahl der Größe der Löcher im Siebboden kann auch der Kompostierungsgrad des den Siebboden passierenden Kompostes bestimmt werden.

Gemäß einem weiteren Merkmal der Erfindung kann vorgesehen sein, daß der Siebboden im Behälter auswechselbar angeordnet ist.

Gemäß einem weiteren Merkmal der Erfindung kann vorgesehen sein, daß der Siebboden zwei übereinanderliegende Siebe aufweist.

Gemäß einem weiteren Merkmal der Erfindung kann am Tragarm eine mit ihm in Umlauf versetzbare Reinigungsvorrichtung für den Siebboden angebracht sein.

Die Rührelemente können erfindungsgemäß als Schnecken oder kernlose Spiralen ausgebildet sein.

### KURZE BESCHREIBUNG DER ZEICHNUNGEN:

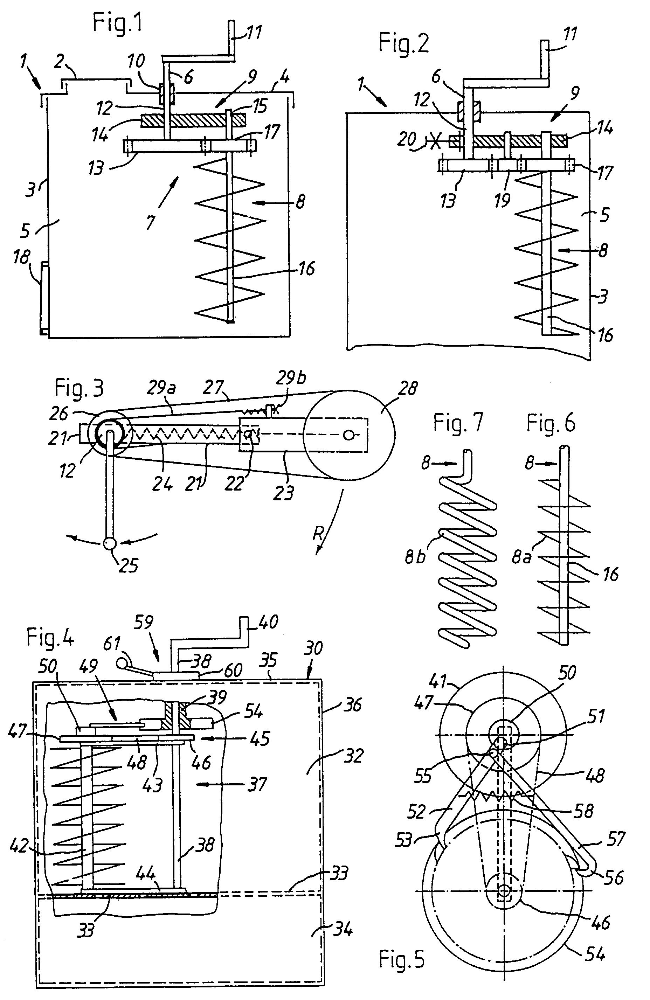

Nachstehend wird die Erfindung an einigen Ausführungsbeispielen anhand der Zeichnungen näher erläutert. In den Zeichnungen zeigen: Fig. 1 eine erste Ausführungsform eines Kompostbehälters schematisch im Schnitt, die Fig. 2 schematisch eine zweite Ausführungsform eines Kompostbehälters im Schnitt, Fig. 3 schematisch einen im Inneren des Behälters angeordneten Antriebsmechanismus einer dritten Ausführungsform des Kompostbehälters, Fig. 4 schematisch eine vierte Ausführungsform eines Kompostbehälters mit einem von außen über eine Handkurbel antreibbaren Rührwerk, Fig. 5 schematisch den Antriebsmechanismus für das Rührwerk des Kompostbehälters gemäß Fig. 4, und Fig. 6 und 7 zwei Rührelemente.

### BESCHREIBUNG VON AUSFÜHRUNGSBEISPIELEN

Fig.1 zeigt einen Vertikalschnitt durch eine erste Ausführungsform eines erfindungsgemäßen Kompostbehälters 1 mit einem mit einer Befüllöffnung 2 versehenen, vom Behälter 3 abnehmbaren Deckel 4 und einer inneren Kammer 5 zur Aufnahme des zu kompostierenden Gutes, in welcher ein von außen über eine äußere Welle 6 antreibbares Rührwerk 7 mit zumindest einem, in der Kammer 5 entlang einer in sich geschlossenen Bahn bewegbaren und um seine eigene Achse drehbaren Rührelement 8 vorgesehen ist, welches mit einem seine Bewegungen steuernden und über die äußere Welle 6 antreibbaren Antriebsmechanismus 9 verbunden ist.

Das jeweilige Rührelement 8 kann als, aus einem Kernrohr mit daran befestigten Schneckengängen bestehende Schnecke 8a (Fig. 6) oder als aus einem spiralig gewundenen Rundmaterial bestehende kernlose Spirale 8b (Fig. 7) ausgebildet sein, wobei die Spiralen neben ihrer billigen Herstellungsform bei guter Mischwirkung nur einen geringen Kraftaufwand erfordern.

Der Antriebsmechanismus 9 für das zwangsweise in einer Kreisbahn bewegte Rührelement 8 sieht eine, am Deckel 4 des Behälters 3 angebrachte Lagerung 10 für die mit einer Handkurbel 11 versehene äußere Welle 6 vor, welche gleichzeitig als Antriebswelle 12 für den Antriebsmechanismus 9 ausgebildet ist und an ihrem unteren Ende ein Zahnrad 13 trägt. Weiters ist auf der Antriebswelle 12 ein drehbarer Tragarm 14 angebracht, der an seinem Ende wiederum die Lagerung 15 für das Rührelement 8 trägt. Mit der Rührelementwelle 16 ist an ihrem oberen Ende ein Zahnrad 17 verbunden, welches im Eingriff mit dem Zahnrad 13 der Antriebswelle 12 steht.

Beim Drehen der Handkurbel 11 wird über die beiden Zahnräder 13, 17 das Rührelement 8 angetrieben, wobei ein das vom Tragarm 14 getragene Rührelement 8 um das Zahnrad 13 der Antriebswelle 12 bewegendes konstantes Drehmoment entsteht, wodurch das Rührelement 8 eine kreisförmige Umlaufbahn im Behälter 3 beschreibt und dabei für eine gewünschte, intensive Durchmischung des Kompostiergutes und gleichzeitig für eine Beförderung des feinen, bereits kompostierten Materials in den unteren Bereich des Behälters 3 sorgt. Die Entnahme des fertigen Kompostes erfolgt im unteren Teil des Behälters 3 durch eine Entnahmeöffnung 18.

Ein weiteres Ausführungsbeispiel eines Kompostbehälters 1 zeigt Fig. 2, wobei der Antriebsmechanismus 9 zur Verstärkung des den Umlauf des Rührelementes 8 bewirkenden Drehmomentes ein Zwischenrad 19 zwischen dem an der Antriebswelle 12 drehfest angebrachten Zahnrad 13 und dem auf der Rührelementwelle 16 drehfest angebrachten Zahnrad 17 zwischengeschaltet ist.

Das Zwischenrad 19 ist im Tragarm 14 drehbar gelagert. Zur stufenlosen Regelung dieses Umlauf-Drehmomentes ist zwischen der Antriebswelle 12 und dem um diese umlaufenden, das Zwischenrad 19 und das Rührelement 8 samt ihrem Antriebsrad 17 tragenden Tragarm 14 eine justierbare Klemmvorrichtung 20 vorgesehen, sodaß bei stärkerer Klemmung die Drehbewegung des, an seinem anderen Ende das Rührelement 8 tragenden Tragarmes 14 beliebig veränderbar ist. Damit ist bei entsprechend ausgelegtem Antrieb auch eine automatische Anpassung der Umlaufbewegung des Rührelementes 8 möglich, sodaß in demselben Maße, in dem das Rührelement 8 sich leichter dreht, die Umlaufbewegung verstärkt wird, und umgekehrt.

Das erzeugte Umlauf-Drehmoment der exzentrischen Rührelementwelle 16 um die Antriebsachse 12, welches im wesentlichen direkt proportional zum Drehwiderstand des Rührelementes 8 in dem dieses umgebenden Kompostiergut ist, reicht nicht immer für einen konstanten Umlauf-Drehvorschub um die Antriebswelle 12 aus. Insbesondere dann, wenn leicht mischbare Abfälle wie z.b. gehäckselter Baum- oder Strauchschnitt vorherrschen, ergibt der Drehwiderstand des Rührelementes 8 einen unzureichenden Umlauf. Dies läßt sich erfindungsgemäß dadurch verbessern, daß entweder ein auf dem die Rührelementwelle 16 tragenden Tragarm 14 befindliches, einstellbares Bremselement direkt auf die Antriebswelle 12 wirkt und damit das Umlauf-Drehmoment des Tragarmes 14 verstärkt, oder daß ein Bremselement direkt auf die Rührelementwelle 16 wirkt. In jedem Falle ergibt sich, daß es bei einem jederzeit durch eine andere Struktur der Abfälle (z.B. nasser Rasenschnitt) möglichen, plötzlichen Ansteigen des seitlichen Widerstands auf die Rührelementwelle 16 diese nicht zwangsweise zum Blockieren kommt, weil das Material nicht so rasch gemischt werden kann, sondern daß das Rührelement 8 zwar mit langsamerem Vorschub, aber mit konstantem Anpreßdruck solange an dem schlechter durchmischbaren Teil der Abfälle angreift, bis diese mit dem anderen Kompostiergut untergemischt sind, wonach sich der Vorschub wieder beschleunigt.

Eine weitere erfindungsgemäße Ausführungsform des Antriebsmechanismus 9 sieht einen in Umlauf um die Antriebswelle 12 versetztbaren gefederten Arm (Fig. 3) vor, der aus dem Tragarm 21 selbst und einem, mit diesem über ein Knickgelenk 22 drehbar verbunden Rührelementträger 23 besteht, wobei das Knickgelenk 22 über eine im Inneren des Tragarmes 21 angeordnete Zugfeder 24 in die gestreckte Lage vorgespannt ist. Die an der äußere Welle angebrachte Handkurbel 25 ist dabei kraftschlüssig mit dem Antriebsrad 26 verbunden, welches mittels eines Riemen- oder Kettentriebes 27 kraftschlüssig mit dem Rührelementantrieb 28 verbunden ist. Um die Antriebswelle 12 ist ein Bremsband 29a einer Bandbremse gelegt, dessen Bremskraft über ein Verstellorgan 29b zum Ausgleich von Verschleiß und Abnutzung regelbar ist und das in jedem Falle die Umlaufbewegung (R) des aus dem Tragarm 21 und dem Rührelementträger 23 bestehenden gefederten Armes um die Antriebswelle 12 vorgibt.

Trifft nun das rotierende Rührelement 8 bei seiner Umlaufbewegung auf eine Ansammlung kompakten, schwer mischbaren Materials, so weicht der Rührelementträger 23 entgegen der Umlaufbewegung (R) und entgegen der Zugkraft der Zugfeder 24 soweit zurück, bis die Bandbremse gelockert wird und damit völlig selbsttätig der Umlauf-Drehvorschub (R) des rotierenden Rührelementes 8 veringert wird. Das weiter angetriebene rotierende Rührelement 8 arbeitet sich nun langsamer durch das kompaktere Material durch bis dieses vermischt ist, wonach der Rührelementträger 23 durch die Wirkung der Zugfeder 24 wieder in die ursprüngliche Lage zurückgeführt wird, die Bandbremse wieder mehr gespannt wird, und der Umlauf-Drehvorschub (R) des Rührelementes 8 wieder voll wirksam wird. Diese Anordnung hat nicht nur den Vorteil, daß ohne Eingriff des Benutzers die Anpassung des Umlauf-Drehvorschubes des Rührelementes 8 automatisch dem zu mischenden Material angepaßt wird, sondern macht genau im Moment des größten Kraftbedarfes, wenn nämlich das Rührelement 8 auf schwer mischbares Material trifft, die volle Antriebskraft für die Rührelementrotation verfügbar, indem genau hier die Bremse 29a,29b gelöst bzw. gelockert wird.

Fig.4 zeigt eine weitere Ausführungsform eines erfindungsgemäßen, vorzugsweise zylindrischen Kompostbehälters 30, dessen Behälter 31 mit einer oberen Kammer 32 zur Aufnahme des zu kompostierenden Gutes und einer von dieser durch einen Siebboden 33 getrennten unteren Kammer 34 zur Entnahme des Kompostes versehen ist. Die obere Kammer 32 ist nach oben durch eine mit einer nicht dargestellten Einfüllöffnung versehene Decke 35 des Behälters 31 begrenzt, die Teil eines von der Außenwand 36 des Behälters 31 abnehmbaren Deckels sein kann.

Im Inneren der oberen Kammer 32 ist ein Rührwerk 37 angeordnet, welches eine sich entlang der Mittelachse der Kammer 32 erstreckende Antriebswelle 38 besitzt, die in einer die Behälterdecke 35 durchsetzenden Hülse 39 drehbar gelagert ist und die einstückig mit einer äußeren Welle 38a ausgebildet ist, die an ihrem oberhalb der Behälterdecke 35 gelegenen äußeren Ende eine Handkurbel 40 trägt. Das Rührwerk 37 umfaßt ein zur Antriebswelle 38 exzentrisch angeordnetes, als Förderschnecke oder drahtförmige Förderspirale ausgebildetes Rührelement 41, dessen Welle 42 in den außenliegenden Enden zweier radialer Tragarme 43,44 drehbar gelagert ist, welche ihrerseits mit ihren innenliegenden Enden auf der Antriebswelle 38 drehbar gelagert sind. Oberhalb des oberen Tragarmes 43 ist ein die Rührelementwelle 42 mit der Antriebswelle 38 verbindender Antrieb 45 vorgesehen, der aus einem auf der Antriebswelle 38 drehfest angebrachten ersten Kettenrad 46, einem auf der Rührelementwelle 42 drehfest angebrachten zweiten Kettenrad 47 und einer diese verbindenden Antriebskette 48 besteht.

Oberhalb des Antriebes 45 für das Rührelement 41 ist ein als Klinkenschaltwerk ausgebildeter Antriebsmechanismus 49 vorgesehen, mittels welchem das Rührelement 41 samt seinem Antrieb 45 und den beiden Tragarmen 43,44 um die Mittelachse der oberen Kammer 32 in Umlauf versetzbar sind. Dieser Antriebsmechanismus 49 weist einen auf der Rührelementwelle 42 drehfest montierten Exzenter 50 auf, auf dem exzentrisch zu seiner Drehachse das eine Ende 51 einer Schubklinke 52 drehbar gelagert ist, welche mit ihrem anderen Ende 53 in ein am unteren Ende der Hülse 39 angebrachtes Klinkenrad 54 eingreift. An der Schubklinke 52 ist im Abstand von ihrem, am Exzenter 50 drehbar gelagerten Ende 51 das eine Ende 55 einer mit ihrem anderen Ende 56 in das Klinkenrad 54 eingreifenden Zugklinke 57 schwenkbar gelagert. Zwischen den beiden Klinken 52,57 ist eine diese zueinanderziehende Zugfeder 58 vorgesehen.

Die die Behälterdecke 5 durchsetzende, an ihrem unteren Ende das Klinkenrad 54 des Antriebsmechanismus 49 tragende Hülse 39 ist in der Behälterdecke 35 drehbar gelagert und kann an dieser über eine an ihrem oberen aus der Decke 35 herausragenden Ende angebrachten Klemmvorrichtung 59 fixiert werden, welche aus einer am oberen Ende der Hülse 39 drehbar gelagerten Exzenterscheibe 60 besteht, die ihrerseits an der Oberseite der Behälterdecke 35 um eine zur Hülsenlängsachse exzentrische Achse drehbar gelagert ist und einen seitlich abstehenden Hebel 61 zum Lösen und Festziehen der Exzenterscheibe 60 trägt. Anstelle der Klemmvorrichtung 59 kann auch ein Klinkengesperre mit einem an der Hülse 39 angebrachten Klinkenrad und einer mittels Handhebel aus- und einklinkbaren, an der Behälterdecke 35 beweglich angebrachten Sperrklinke vorgesehen sein.

Zum Umwälzen des Behälterinhaltes wird das Rührelement 41 bei gegenüber der Behälterdecke 35 fixierter Hülse 39 um seine eigene Achse durch Drehung der Handkurbel 40 über den Antrieb 45 in Drehung versetzt und das Rührelement 41 samt den Tragarmen 43,44 über den Antriebsmechanismus 49 um die Mittelachse der oberen Kammer 32 zwangsweise in Umlauf versetzt.

Sollte das zu durchmischende Material durch die Zugabe einer großen Menge von neuem Kompostiergut stellenweise so kompakt sein, daß sich die Handkurbel 40 nur mehr sehr schwer drehen läßt, so kann der Antriebsmechanismus 49 durch Lösen der Klemmvorrichtung 59 unwirksam gemacht werden. Durch das Lösen der Klemmvorrichtung 59 wird die Hülse 39 samt dem Klinkenrad 54 an ihrem unteren Ende freigegeben, sodaß die beiden Klinken 52 und 57 nicht mehr an einem behälterfesten, sondern an einem in der Behälterdecke 35 frei drehbaren Klinkenrad 54 angreifen. Dadurch kommt die Umlaufbewegung des Rührelementes 41 zum Stillstand. Das Kompostiergut kann nun durch Weiterdrehen der Handkurbel 40 bei gelöster Klemmvorrichtung 59 so weit aufgelockert werden, daß die Handkurbel 40 wieder leichtgängig wird. Anschließend wird die Klemmvorrichtung 59 wieder festgezogen und damit das Klinkenrad 54 wieder an der Behälterdecke 35 fixiert, sodaß die am Klinkenrad 54 angreifenden Klinken 52 und 57 das Rührelement 41 samt den radialen Tragarmen 43,44 wieder um die Mittelachse der oberen Kammer 32 in Umlauf versetzen.

Die für die Belüftung des Kompostiergutes erforderliche Frischluftzufuhr erfolgt über die seitliche, nicht dargestellte Entnahmeöffnung in der unteren Kammer 34 durch die Löcher des Siebbodens 33 hindurch zum Kompostiergut. Nach dem Passieren des Kompostiergutes strömt die Luft über die in der Behälterdecke 35 vorgesehene Einfüllöffnung aus der oberen Kammer 32 aus dem Kompostbehälter 30 hinaus.

Der Siebboden 33 kann bei Abfällen, die im Laufe des Kompostierungsprozesses eine Volumensreduktion von ca. 50%-60% erfahren, in etwa 1/5 der Höhe des Kompostbehälters 30 angeordnet sein, um einerseits in der oberen Kammer 32 über den Siebboden 33 ein ausreichendes Nutzvolumen für das zu kompostierende Gut zu haben und anderseits genügend Fassungsvermögen für fertigen Kompost in der unteren Kammer 34 zu haben, um den fertigen Kompost nicht in sehr kurzen Zeitabständen entnehmen zu müssen.

Eine bevorzugte Ausführungsform sieht den Siebboden 33 in Form eines Lochbleches mit einem Bohrungsdurchmesser von ca. 10-15 mm vor, wobei der Siebboden 33 auf an der Innenwand des Kompostbehälters 30 angebrachten Konsolen entnehmbar angebracht ist, und bei gewünschter kleinerer Korngröße einfach gegen ein Lochblech mit kleineren Bohrungen ausgewechselt werden kann.

Um die Siebe leichter auswechseln zu können, kann der Siebboden zwei übereinanderliegende Siebe aufweisen, die über einen seitlichen Schlitz in der Außenwand 36 des Kompostbehälters 30 auswechselbar sind.

Der unmittelbar oberhalb des Siebbodens 33 angeordnete Tragarm 44 des Rührwerkes 37 kann ein Abstreifmesser oder eine Bürste oder eine andere mit ihm in Umlauf um die Mittelachse der oberen Kammer 32 versetzbare Reinigungsvorrichtung für den Siebboden 33 tragen.

Der erfindungsgemäße Kompostbehälter kann statt einem zylindrischen Querschnitt auch einen Polygonquerschnitt mit vorzugsweise abgerundeten Ecken besitzen. Die beiden Kammern des Kompostbehälters können statt Teil eines einstückigen Behälters zu sein auch in zwei übereinanderzustapelnden Behältern ausgebildet sein. Es kann auch ein nur die obere Kammer mit dem Rührwerk enthaltender Kompostbehälter vorgesehen sein, der den fertigen Kompost nach unten ausgibt und beispielsweise auf vier Füßen steht oder auf einer Wandkonsole oberhalb einer Kompostsammelgrube angeordnet ist.

Bei dem erfindungsgemäßen Kompostbehälter kann anstelle der, an der äußeren Welle angebrachten Handkurbel auch ein über eine Solarbatterie gespeister Elektromotor zum Antreiben des Rührwerks vorgesehen sein.

## Patentansprüche

1. Kompostbehälter (1,30) mit einem von außen über eine Antriebswelle (6,12,38,38a) antreibbaren Rührwerk (7,37) mit zumindest einem im Inneren des Kompostbehälters (1,30) angeordneten, von der Antriebswelle (6,38a) in Drehung um seine eigene Achse versetzbaren Rührelement (8,41) zum Umwälzen des Behälterinhaltes, dadurch gekennzeichnet, daß eine Kammer (5, 32) zur Aufnahme des zu kompostierenden Gutes vorgesehen ist, in der das zumindest eine, exzentrisch zur Antriebswelle (6,12,38, 38a) angeordnete und entlang einer in sich geschlossenen Bahn in Umlauf versetzbare Rührelement (8,41) vorgesehen ist, welches mit der Antriebswelle (6,12,38,38a) über einen, die Rotations- und Umlaufbewegungendes Rührelementes (8,41) steuernden und diese Bewegungenveränderbar miteinander koppelnden Antriebsmechanismus (9,45,49) verbunden ist.

2. Kompostbehälter nach Anspruch 1, dadurch gekennzeichnet, daß der Antriebsmechanismus (9,45,49) im Inneren des Behälters (1,30) angeordnet ist.

3. Kompostbehälter nach Anspruch 1 oder 2, dadurch gekennzeichnet, daß der Antriebsmechanismus (9,45,49) an der Unterseite eines, den Behälter (1,30) nach oben abschließenden, vorzugsweise abnehmbaren Deckels (4) angebracht ist.

4. Kompostbehälter nach Anspruch einem der Ansprüche 1 bis 3, dadurch gekennzeichnet, daß der Antriebsmechanismus (9,45, 49) einen, das Rührelement (8,41) tragenden, um die Antriebswelle (6,12,38,38a) in Umlauf versetzbaren Tragarm (14,21,43) und eine mit dem Tragarm (14,21,43) in Umlauf versetzbare, das Rührelement (8,41) mit der Antriebswelle (6,12,38,38a) verbindende Kraftübertragung (13,17,19,26,27,28,46,47,48) umfaßt.

5. Kompostbehälter nach Anspruch 4, dadurch gekennzeichnet, daß der Tragarm (14,21) zum veränderbaren Koppeln der Rotations- und Umlaufbewegungen des Rührelementes (8) mit der Antriebswelle (6,12) kraftschlüssig verbindbar ist.

6. Kompostbehälter nach Anspruch 5, dadurch gekennzeichnet, daß zur kraftschlüssigen Verbindung von Antriebswelle (6,12) und Tragarm (14,21) eine Reibungsbremse (20,29a, 29b) für die Drehmomentübertragung von der Antriebswelle (6,12) auf den Tragarm (14, 21) vorgesehen ist.

7. Kompostbehälter nach Anspruch 4, dadurch gekennzeichnet, daß der Tragarm (14) zum veränderbaren Koppeln der Rotations- und Umlaufbewegungen des Rührelementes (8) mit der Rührelementwelle (16) kraftschlüssig verbindbar ist.

8. Kompostbehälter nach Anspruch 7, dadurch gekennzeichnet, daß zur kraftschlüssigen Verbindung von Rührelementwelle (16) und Tragarm (14) eine Reibungsbremse für die Drehmomentübertragung von der Rührelementwelle (16) auf den Tragarm (14) vorgesehen ist.

9. Kompostbehälter nach Anspruch 6 oder 8, dadurch gekennzeichnet, daß eine Vorrichtung (29b) zum Verstellen der Reibungsbremse vorgesehen ist.

10. Kompostbehälter nach Anspruch 9, dadurch gekennzeichnet, daß ein am Tragarm (14, 21) angebrachter, mit dem Kompostiergut in Eingriff bringbarer mechanischer Fühler mit der Vorrichtung zum Verstellen der Reibungsbremse verbunden ist.

11. Kompostbehälter nach Anspruch 4, dadurch gekennzeichnet, daß am Tragarm (21) ein gegenüber diesem entgegen Federkraft bewegbarer Rührelementträger (23) vorgesehen ist, in welchem die Rührelementwelle drehbar gelagert ist, und daß der Rührelementträger (23) zum veränderbaren Koppeln der Rotations- und Umlaufbewegungen des Rührelementes über eine Reibungsbremse (29a,29b) mit der Antriebswelle (12) kraftschlüssig verbindbar ist.

12. Kompostbehälter nach Anspruch 11, dadurch gekennzeichnet, daß der Rührelementträger (23) mit einer Vorrichtung (29b) zum Verstellen der Reibungsbremse verbunden ist.

13. Kompostbehälter nach Anspruch 11 oder 12, dadurch gekennzeichnet, daß der Rührelementträger (23) über ein mittels Federkraft in die gestreckte Lage vorgespanntes Knickgelenk (22) mit dem Tragarm (21) verbunden ist.

14. Kompostbehälter nach einem der Ansprüche 11 bis 13, dadurch gekennzeichnet, daß zum veränderbaren Koppeln der Rotations- und Umlaufbewegungen des Rührelementes eine, durch die Relativbewegung zwischen Tragarm (21) und Rührelementträger (23) verstellbare Bandbremse (29a,29b) vorgesehen ist, wobei die dieser Relativbewegung entgegenwirkende Feder (24) als Spannfeder für die Bandbremse (29a,29b) ausgebildet ist.

15. Kompostbehälter nach Anspruch 4, dadurch gekennzeichnet, daß der Antriebsmechanismus (45) ein Klinkenschaltwerk (49) zum in Umlaufversetzen des Tragarmes (43) aufweist.

16. Kompostbehälter nach Anspruch 15, dadurch gekennzeichnet, daß das Klinkenschaltwerk (49) ein am Behälter (30) bzw. Behälterdeckel fixierbares Klinkenrad (54) und zumindest eine, mit diesem in Eingriff bringbare Antriebsklinke (52,57) aufweist, die mittels eines mit dem Rührelement (41) mitrotierenden Exzenters (50) bewegbar ist.

17. Kompostbehälter nach Anspruch 16, dadurch gekennzeichnet, daß das Klinkenschaltwerk (49) eine, an einem mit dem Rührelement (41) mitrotierenden Exzenter (50) schwenkbar gelagerte Schubklinke (52) und eine an der Schubklinke (52) schwenkbar gelagerte Zugklinke (57) und eine an beiden Klinken (52,57) angreifende, die Klinken (52,57) gegen das Klinkenrad (54) drückende Feder (58) aufweist.

18. Kompostbehälter nach Anspruch 16, dadurch gekennzeichnet, daß das Klinkenrad (54) an einer die Decke (35) des Behälters (31) bzw. des Behälterdeckels durchsetzenden Hülse (39) angebracht ist, welche in der Decke (35) drehbar gelagert ist und mittels einer von der Oberseite der Decke (35) zugänglichen Klemmvorrichtung (59) an der Decke (35) fixierbar ist.

19. Kompostbehälter nach einem der Ansprüche 4 bis 18, dadurch gekennzeichnet, daß die das Rührelement (8) mit der Antriebswelle (6,12) verbindende Kraftübertragung zwei ineinandergreifende, auf der Antriebswelle (12) bzw. auf der Rührelementwelle (16) jeweils drehfest angeordnete Antriebsräder (13,17) aufweist.

20. Kompostbehälter nach Anspruch 19, dadurch gekennzeichnet, daß zwischen den beiden Antriebsrädern (13,17) ein am Tragarm (14) drehbar gelagertes Zwischenrad (19) zwischengeschaltet ist.

21. Kompostbehälter nach einem der Ansprüche 4 bis 18, dadurch gekennzeichnet, daß die das Rührelement (8,41) mit der Antriebswelle (6,12,38,38a) verbindende Kraftübertragung als, gegebenenfalls gekapselter, Kettentrieb ausgebildet ist.

22. Kompostbehälter nach einem oder mehreren der Ansprüche 1 bis 21, dadurch gekennzeichnet, daß die Kammer (32) zur Aufnahme des zu kompostierenden Gutes nach unten durch einen Siebboden (33) begrenzt ist.

23. Kompostbehälter nach Anspruche 22, dadurch gekennzeichnet, daß der Siebboden (33) im Behälter (31) auswechselbar angeordnet ist.

24. Kompostbehälter nach Anspruch 22 oder 23, dadurch gekennzeichnet, daß der Siebboden (33) zwei übereinanderliegende Siebe aufweist.

25. Kompostbehälter nach einem der Ansprüche 4 bis 24, dadurch gekennzeichnet, daß am Tragarm (44) eine mit ihm in Umlauf versetzbare Reinigungsvorrichtung für den Siebboden (33) angebracht ist.

26. Kompostbehälter nach einem oder mehreren der Ansprüche 1 bis 25, dadurch gekennzeichnet, daß die Rührelemente (8,41) als Schnecken oder kernlose Spiralen ausgebildet sind.

## Claims

1. Compost container (1, 30) with a stirring device (7,37) operable from the exterior by means of a drive shaft (6, 12, 38, 38a), with at least one stirring element (8, 41) disposed inside the compost container (1,30) and rotatable about its own axis by the drive shaft (6, 38a) in order to circulate the contents of the container, characterized in that a chamber (5, 32) is provided for receiving the material to be composted, at least one stirring element (8, 41) being provided in the chamber (5, 32) and being arranged eccentrically relative to the drive shaft (6, 12, 38, 38a) and movable orbitally along a closed path, the stirring element (8, 41) being connected to the drive shaft (6, 12, 38, 38a) by means of a drive mechanism (9, 45, 49) which controls the rotary and orbital movements of the stirring element (8, 41) and links these movements with one another in a variable manner.

2. Compost container according to Claim 1, characterized in that the drive mechanism (9, 45, 49) is disposed inside the container (1, 30).

3. Compost container according to Claim 1 or Claim 2, characterized in that the drive mechanism (9, 45, 49) is mounted on the underside of a lid (4) which closes the container (1, 20) at the top and is preferably removable.

4. Compost container according to any one of Claims 1 to 3, characterized in that the drive mechanism (9, 45, 49) includes a support arm (14, 21, 43) carrying the stirring element (8, 41) and movable orbitally around the drive shaft (6, 12, 38, 38a) and a transmission (13, 17, 19, 26, 27, 28, 46, 47, 48) movable orbitally with the support arm (14, 21, 43) and connecting the stirring element (8, 41) to the drive shaft (6, 12, 38, 38a).

5. Compost container according to Claim 4, characterized in that the support arm (14, 21) can be connected frictionally to the drive shaft (6, 12) for the variable linkage of the rotary and orbital movements of the stirring element (8).

6. Compost container according to Claim 5, characterized in that, for the frictional connection of the drive shaft (6, 12) and the support arm (14, 21), a friction brake (20, 29a, 29b) is provided for transmitting torque from the drive shaft (6, 12) to the support arm (14, 21).

7. Compost container according to Claim 4, characterized in that the support arm (14) can be connected frictionally to the shaft (16) of the stirring element for the variable linkage of the rotary and orbital movements of the stirring element (8).

8. Compost container according to Claim 7, characterized in that, for the frictional connection of the shaft (16) of the stirring element and the support arm (14), a friction brake is provided for transmitting torque from the shaft (16) of the stirring element to the support arm (14).

9. Compost container according to Claim 6 or Claim 8, characterized in that a device (29b) is provided for adjusting the friction brake.

10. Compost container according to Claim 9, characterized in that a mechanical feeler, which can be mounted on the support arm (14, 21) and can be brought into engagement with the material to be composted, is connected to the device for adjusting the friction brake.

11. Compost container according to Claim 4, characterized in that a stirring-element support (23), in which the shaft of the stirring element is mounted rotatably, is provided on the support arm (21) and is movable relative thereto against resilient resistance, and in that the stirring-element support (23) can be connected frictionally to the drive shaft (12) by means of a friction brake (29a, 29b) for the variable linkage of the rotary and orbital movements of the stirring element.

12. Compost container according to Claim 11, characterized in that the stirring-element support (23) is connected to a device (29b) for adjusting the friction brake.

13. Compost container according to Claim 11 or Claim 12, characterized in that the stirring-element support (23) is connected to the support arm (21) by means of an articulated joint (22) prestressed to the extended position by a resilient force.

14. Compost container according to any one of Claims 11 to 13, characterized in that for the variable linkage of the rotary and orbital movements of the stirring element, a belt brake (29a, 29b) adjustable by the relative movement between the support arm (21) and the stirring-element support (23) is provided, the spring (24) opposing this relative movement being formed as the tensioning spring for the belt brake (29a, 29b).

15. Compost container according to Claim 4, characterized in that the drive mechanism (45) comprises a ratchet mechanism (49) for the orbital movement of the support arm (43).

16. Compost container according to Claim 15, characterized in that the ratchet mechanism (49) comprises a ratchet wheel (54) which can be fixed to the container (30) or the container lid and at least one drive pawl (52, 57) which can be brought into engagement therewith and which is movable by means of a cam (50) rotating with the stirring element (41).

17. Compost container according to Claim 16, characterized in that the ratchet mechanism (49) comprises a thrust pawl (52) mounted pivotably on a cam (50) rotating with the stirring element (41), a pulling pawl (57) mounted pivotably on the thrust pawl (52), and a spring (58) engaging both pawls (52, 57) and urging the pawls (52, 57) towards the ratchet wheel (54).

18. Compost container according to Claim 16, characterized in that the ratchet wheel (54) is mounted on a sleeve (39) extending through the casing (35) of the container (31) or the container lid, the sleeve (39) being mounted rotatably in the casing (35) and being fixable to the casing by means of a clamping device (59) accessible from the upper side of the casing (35).

19. Compost container according to any one of Claims 4 to 18, characterized in that the transmission connecting the stirring element (8) to the drive shaft (6, 12) comprises two driving wheels (13, 17) meshed with one another and fixed for rotation with the drive shaft (12) and with the stirring-element shaft (16), respectively.

20. Compost container according to Claim 19, characterized in that, an intermediate wheel (19) mounted rotatably on the support arm (14) is interposed between the two driving wheels (13, 17).

21. Compost container according to any one of Claims 4 to 18, characterized in that the transmission connecting the stirring element (8, 41) to the drive shaft (6, 12, 38, 38a) is formed as a chain drive, which may be enclosed.

22. Compost container according to one or a plurality of Claims 1 to 21, characterized in that the chamber (32) for receiving the material to be composted is defined at the bottom by a riddle plate (33).

23. Compost container according to Claim 22, characterized in that the riddle plate (33) is arranged replaceably in the container (31).

24. Compost container according to Claim 22 or Claim 23, characterized in that the riddle plate (33) comprises two superimposed riddles.

25. Compost container according to any one of Claims 4 to 24, characterized in that a device for cleaning the riddle plate (33) is mounted on the support arm (44) and movable orbitally therewith.

26. Compost container according to one or a plurality of Claims 1 to 25, characterized in that the stirring elements (8, 41) are formed as helices or coreless spirals.

## Revendications

1. Récipient à compost (1, 30) avec un mécanisme d'agitation (7, 37) entraînable depuis l'extérieur par un arbre d'entraînement (6, 12, 38, 38a) et avec un élément agitateur (8, 41) disposé à l'intérieur du récipient à compost (1, 30) monté remplaçable sur l'arbre d'entraînement (6, 38a) et en rotation autour de son axe propre pour provoquer la circulation du contenu du récipient, **caractérisé en ce qu**'il est prévu une chambre (5, 32) pour la réception des matériaux devant former le compost, dans laquelle est prévu au moins un élément agitateur (8, 41) monté remplaçable, situé excentriquement par rapport à l'arbre d'entraînement (6, 12, 38, 38a) et en circulation périphérique le long d'un trajet fermé sur lui-même, lequel élément agitateur (8, 41) est connecté à l'arbre d'entraînement (6, 12, 38, 38a) par un mécanisme d'entraînement (9, 45, 49) commandant le déplacement en rotation et le déplacement en circulation périphérique de l'élément agitateur (8, 41) en lui étant accouplé de manière à rendre modifiables ces déplacements.

2. Récipient à compost selon la revendication 1, caractérisé en ce que le mécanisme d'entraînement (9, 45, 49) est disposé à l'intérieur du récipient (1, 30).

3. Récipient à compost selon la revendication 1 ou 2, caractérisé en ce que le mécanisme d'entraînement (9, 45, 49) est fixé à la face inférieure d'un couvercle (4), de préférence amovible, fermant le récipient (1, 30) vers le haut.

4. Récipient à compost selon l'une des revendications 1 à 3, caractérisé en ce que le mécanisme d'entraînement (9, 45, 49) comprend un bras de support (14, 21, 43) portant l'élément agitateur (8, 41) et monté remplaçable et mobile périphériquement autour de l'arbre d'entraînement (6, 12, 38, 38a) et un mécanisme de transmission d'énergie (13, 17, 19, 26, 27, 28, 46, 47, 48) reliant en mouvement périphérique l'élément agitateur (8, 41) avec son arbre d'entraînement (6, 12, 38, 38a) au bras de support remplaçable (14, 21, 43) en mouvement périphérique.

5. Récipient à compost selon la revendication 4, caractérisé en ce que le bras de support (14, 21) peut être connecté positivement à l'arbre d'entraînement (6, 12) en vue d'un couplage modifiable des mouvements en rotation et en circulation périphérique de l'élément agitateur (8).

6. Récipient à compost selon la revendication 5, caractérisé en ce que, en vue d'une liaison positive de l'arbre d'entraînement (6, 12) avec le bras de support (14, 21), il est prévu un frein à friction (20, 29a, 29b) pour le transfert du couple de rotation de l'arbre d'entraînement (6, 12) au bras de support (14, 21).

7. Récipient à compost selon la revendication 4, caractérisé en ce que, en vue du couplage modifiable des mouvements en rotation et en circulation périphérique de l'élément agitateur (8), le bras de support (14) peut être connecté positivement à l'arbre (16) de l'élément agitateur.

8. Récipient à compost selon la revendication 7, caractérisé en ce que, en vue de la liaison positive entre l'arbre (16) de l'élément agitateur et le bras de support (14), il est prévu un frein à friction pour le transfert du couple de rotation de l'arbre (16) de l'élément agitateur au bras de support (14).

9. Récipient à compost selon la revendication 6 ou 8, caractérisé en ce qu'il est prévu un dispositif (29b) pour le réglage du frein à friction.

10. Récipient à compost selon la revendication 9, caractérisé en ce qu'un palpeur mécanique fixé au bras de support (14, 21) et pouvant être amené en prise avec le matériau du compost est relié au dispositif de réglage du frein à friction.

11. Récipient à compost selon la revendication 4, caractérisé en ce que, sur le bras de support (21) est prévu un support d'élément agitateur (29), mobile par rapport à lui à l'encontre d'une force élastique, et dans lequel est monté rotatif l'arbre de l'élément agitateur, et en ce que le support d'élément agitateur (23) peut être relié positivement à l'arbre d'entraînement (12) en vue du couplage modifiable des mouvements en rotation et en circulation périphérique de l'élément agitateur par l'intermédiaire d'un frein à friction (29a, 29b).

12. Récipient à compost selon la revendication 11, caractérisé en ce que le support d'élément agitateur (23) est relié à un dispositif (29b) pour le réglage du frein à friction.

13. Récipient à compost selon la revendication 11 ou 12, caractérisé en ce que le support d'élément agitateur (23) est relié au bras de support (21) par l'intermédiaire d'une articulation à déclenchement brusque (22) maintenue à l'état tendu par une force élastique.

14. Récipient à compost selon l'une des revendications 11 à 13, caractérisé en ce que, en vue du couplage modifiable des mouvements en rotation et en circulation périphérique de l'élément agitateur, il est prévu un frein à courroie (29a, 29b) réglable par le déplacement relatif entre le bras de support (21) et le support (23) d'élément agitateur, de telle manière que le ressort (24) agissant à l'encontre de ce déplacement relatif constitue le ressort de tension pour le frein à courroie (29a, 29b).

15. Récipient à compost selon la revendication 4, caractérisé en ce que le mécanisme d'entraînement (45) comporte un commutateur à cliquet (49) pour la modification du mouvement périphérique du bras de support (43).

16. Récipient à compost selon la revendication 15, caractérisé en ce que le commutateur à cliquet (49) se compose d'une roue à rochets (54) pouvant être fixée au récipient (30) ou au couvercle du récipient et d'au moins un cliquet d'entraînement (52, 57) pour venir en prise avec elle, ce cliquet pouvant être déplacé au moyen d'une excentrique (50) pivotant conjointement à l'élément agitateur (41).

17. Récipient à compost selon la revendication 16, caractérisé en ce que le commutateur à cliquet (49) se compose d'une biellette de poussée (52) montée basculante sur l'excentrique pivotant conjointement à l'élément agitateur (41), d'une biellette de traction (57) montée basculante sur la biellette de poussée (52) et d'un ressort (58) agissant sur les deux cliquets (52, 57) en les repoussant contre la roue à rochets (54).

18. Récipient à compost selon la revendication 16, caractérisé en ce que la roue à rochet (54) est fixée à un manchon (39) traversant le couvercle (35) du récipient (31), lequel manchon est monté pivotant dans le couvercle (35) et peut être immobilisé sur le couvercle (35) grâce à un dispositif de blocage (59) accessible sur la face supérieure du couvercle (35).

19. Récipient à compost selon l'une des revendications 4 à 18, caractérisé en ce que le système de transmission d'énergie de l'arbre d'entraînement (6, 12) à l'élément agitateur (8) se compose de deux roues d'entraînement (13, 17) en prise l'une avec l'autre et montées chacune solidaire en rotation de l'arbre d'entraînement (12) et de l'arbre (16) de l'élément agitateur respectivement.

20. Récipient à compost selon la revendication 19, caractérisé en ce que, entre les deux roues d'entraînement (13, 17) est intercalée une roue intermédiaire (19) montée solidaire en rotation sur le bras de support (14).

21. Récipient à compost selon l'une des revendications 4 à 18, caractérisé en ce que le système de transmission d'énergie reliant l'arbre d'entraînement (6, 12, 38, 38a) et l'élément agitateur (8, 41) consiste en une transmission à chaîne, éventuellement sous un capot.

22. Récipient à compost selon une ou plusieurs des revendications 1 à 21, caractérisé en ce que la chambre de réception (32) des matériaux destinés à former le compost est délimitée vers le bas par un fond formant tamis (33).

23. Récipient à compost selon la revendication 22, caractérisé en ce que le fond formant tamis (33) du récipient (31) est échangeable.

24. Récipient à compost selon la revendication 22 ou 23, caractérisé en ce que le fond formant tamis (33) se compose de deux tamis superposés.

25. Récipient à compost selon l'une des revendications 4 à 24, caractérisé en ce que, sur le bras de support (44) est fixé un dispositif de nettoyage du fond formant tamis (33), dont le mouvement de circulation périphérique est modifiable avec lui.

26. Récipient à compost selon l'une ou plusieurs des revendications 1 à 25, caractérisé en ce que l'élément agitateur (8, 41) a la forme d'une vis sans fin ou d'une spirale sans noyau.
